# EUROPÄISCHE PATENTANMELDUNG

(11) **EP 0 963 772 A2**
(43) Veröffentlichungstag der Anmeldung: **15.12.1999**
(21) Anmeldenummer: 99111146.9
(22) Anmeldetag: 08.06.1999
(51) Int. Cl.: B01D 33/04

(54) **Verfahren zur Gewinnung zumindest einer festen Phase aus einem Ein- oder Mehrkomponentensystem**

(30) Priorität: 09.06.1998 AT 99298
(71) Anmelder: Wustinger, Horst, 5204 Strasswalchen (AT)
(72) Erfinder: Wustinger, Horst, 5204 Strasswalchen (AT)
(74) Vertreter: Secklehner, Günter, Dr.

(57) **Zusammenfassung**

Die Erfindung betrifft ein Verfahren zur Gewinnung zumindest einer festen Phase aus einem Ein- oder Mehrkomponentensystem, bei dem ein bahnförmiger Träger (2) mit Hilfe von Stütz- und/oder Führungsmittel zumindest bereichsweise durch einen Behälter (4) geführt wird, welcher die in einem Lösungsmittel bzw. -gemisch gelöste und/oder in dem Lösungsmittel bzw. einer Flüssigkeit verteilte feste Phase aufnimmt. Dabei scheidet sich eine bestimmbare Menge auf dem Träger (2) ab. Der Träger (2) wird nach dem Tauchvorgang einem Distributionsmittel, z.B. einer Aufwickelrolle (7), einem Stapelbehältnis oder dgl. zugeführt. Die auf dem Träger (2) aufgebrachte Menge an fester Phase wird durch die Ziehgeschwindigkeit des Trägers (2) durch das Bad bestimmt.

## Beschreibung

Die Erfindung betrifft ein Verfahren zur Gewinnung einer festen Phase aus einem Ein- oder Mehrkomponentensystem sowie eine Anlage zur Durchführung dieses Verfahrens und einen Feststoff, der nach diesen Verfahren hergestellt wird, gemäß den Oberbegriffen der Ansprüche 1, 23 bzw. 29.

Viele Feststoffe durchlaufen während Ihres Herstellungsprozesses Produktionsschritte, in denen sie in diversen Lösungsmitteln gelöst sind. Beispielsweise fallen viele Additiva für die Bauindustrie in flüssiger Form an, können jedoch den daraus hergestellten Mischungen nur in fester Form zugesetzt werden. Es ist daher notwendig das Lösungsmittel zu entfernen. Die Verfahren, die dazu üblicherweise verwendet werden, sind entweder zeitintensiv, wie z.B. die freie Kristallisation oder aber kosten- bzw. energieintensiv, wie beispielsweise die Sprühtrocknung. So wird im Sprühturm, einem isolierten Großbehälter, von unten ständig heiße Luft eingeblasen und von oben die zu trocknende Chemikalienflüssigkeit aufgegeben. Dies geschieht entweder mittels Verdüsung oder mittels einer schnell rotierenden Scheibe, auf die die Flüssigkeit aufgebracht wird, sodaß die Scheibe die Flüssigkeit in einen feinen Film zerteilt. Die dabei entstehenden Tröpfchen sinken aufgrund der Schwerkraft zu Boden und werden durch die von unten her vorbeistreichende heiße Luft getrocknet. Die dabei entstehenden trockenen Chemikalienpulver können vom Boden ausgetragen werden. Nachteilig bei diesen Verfahren ist neben den enormen Kosten für die Errichtung dieser Sprühtürme bzw. den enormen Energieeinsatz zur Bereitstellung der heißen Luft, daß damit nur solche Feststoffe gewonnen werden können, welche einer erhöhten Temperaturbelastung ohne Qualitätsverlust standhalten.

Der Erfindung liegt nun die Aufgabe zugrunde, eine feste Phase auf schonende Art und Weise aus Lösungen zu gewinnen bzw. eine unter Umständen hochviskose Phase weiter zu verdicken oder zu verfestigen.

Diese Aufgabe wird durch die Merkmale im Anspruch 1 gelöst. Von Vorteil ist dabei, daß die auf dem Träger abgeschiedenen Partikel der festen Phasen eine Oberfläche aufweisen, die ein gutes Lösungsverhalten ermöglicht. Dies ist beispielsweise in der Bauindustrie bei der Herstellung von Putzen oder dgl. erwünscht, wofür diese festen Phasen in einem sogenannten Anmachwasser gelöst bzw. dispergiert werden. Weiters kann mit dem Auftrag der Lösung bzw. der Dispersion der festen Phasen in der jeweiligen Flüssigkeit auf den Träger vermieden werden, daß die einzelnen Pulverteilchen untereinander verkleben. Es kann deswegen auch auf einen chemischen Zusatz, der diese Verklumpung verhindert, verzichtet werden. Von Vorteil ist auch, daß die auf dem Träger abgeschiedene Menge über die Ziehgeschwindigkeit des Trägers durch das Bad, welches die Lösung bzw. Dispersion aufnimmt, vorherbestimmbar ist, sodaß auf einfache Art und Weise mit unterschiedlichen Mengen beladene Trägerbahnen hergestellt werden können und ist damit eine gute Zudosierung dieser Feststoffe zu anderen Feststoffen bzw. Feststoffmischungen möglich.

Von Vorteil ist aber auch eine Ausbildung nach Anspruch 2, mit dem eine gleichmäßige Beladung des bahnförmigen Trägers auf beiden Seiten möglich ist.

Als Vorteil erweist sich auch eine Ausgestaltung nach Anspruch 3, da es damit möglich ist, einen Träger zur Verfügung zu stellen, der eine hohe Saugfähigkeit und dadurch eine hohe Aufnahmefähigkeit für die jeweilige Badformulierung aufweist. Zudem können damit auch Sekundärrohstoffe, wie beispielsweise Altpapier als Träger eingesetzt werden und ist damit eine Schonung der Primärressourcen möglich.

Durch eine Ausgestaltung nach Anspruch 4 kann als Vorteil erreicht werden, daß der Flüssigkeitsanteil des Trägers und/oder Feststoffes weiter gesenkt wird und können damit Transportkosten für die Versendung des hergestellten Produktes aufgrund der Gewichtsreduktion gesenkt werden.

Vorteilhaft ist dabei auch eine Ausgestaltung nach Anspruch 5, wonach es möglich wird, auch solche Feststoffe zu verarbeiten, die einer erhöhten Temperaturbelastung, wie sie bei üblichen Trocknungsverfahren auftritt, nicht standhalten.

Mit einer Ausgestaltung nach Anspruch 6 kann mit Vorteil eine schonende Trocknung des Feststoffes erreicht werden.

Bei einer Ausgestaltung nach Anspruch 7 ist von Vorteil, daß Halbfertigfabrikate soweit vorgetrocknet werden können, daß damit eine unproblematische Weiterverarbeitung letzterer möglich wird.

Durch eine mechanische Vortrocknung gemäß Anspruch 8 ist es möglich, den Energieeinsatz für die Endtrocknung und somit den Energieumsatz beim gesamten Verfahren zu senken.

Vorteilhaft ist aber auch eine Ausgestaltung nach Anspruch 9, wonach es möglich ist, eine Feststofformulierung bereit zu stellen, die über ein gesamtes Volumen annähernd gleiche Eigenschaften aufweist.

Von Vorteil ist dabei eine Ausgestaltung nach Anspruch 10, mit der eine gleichmäßige Verteilung der einzelnen festen Phasen bereits in der Badformulierung bewirkt werden kann.

Durch das Aufkonzentrieren der Lösung nach Anspruch 11 kann mit Vorteil eine größere Schichtdicke des Feststoffes auf dem Träger bei gleichzeitiger Erhöhung der Ziehgeschwindigkeit des Trägers durch das Tauchbad erreicht werden.

Durch eine Ausgestaltung nach Anspruch 12 kann auf vorteilhafte Weise eine ungleichmäßige Verteilung des Feststoffes, beispielsweise durch vorzeitige Kristallisation auf dem Träger vermieden werden.

Vorteilhaft ist aber auch eine Ausbildung nach den Ansprüchen 13 oder 14, wonach es möglich ist, die auf dem Träger abgeschiedene feste Phase vor äußeren Einflüssen zu schützen und zudem die Saugwirkung der zusätzlichen Trägerbahnen zur schnelleren Entfernung des Lösungsmittels auszunutzen.

Von Vorteil bei einer Ausbildung nach Anspruch 15 ist, daß mit Hilfe der Anspreßwalzen nicht nur die weiteren Trägerbahnen auf den Oberflächen des beladenen Trägers fixiert werden können, sondern auch eine Regulierung der aufgenommenen Menge an Badformulierung durch den Anpreßdruck dieser Walzen möglich ist.

Durch die Ausgestaltungen nach den Ansprüchen 16 oder 17 ist es auf vorteilhafte Weise möglich, die getrockneten festen Phasen sofort zur Weiterverarbeitung bereit zu stellen.

Vorteilhaft ist aber auch eine Ausgestaltung nach Anspruch 18, da damit eine gleichmäßige Oberflächenbeschichtung der festen Phase mit zusätzlichen Chemikalien möglich ist. Vorteilhaft ist dabei auch, daß es auf diese Weise möglich wird, unverträgliche Komponenten, wie beispielsweise anionische mit kationischen gemeinsam auf dem Träger zur Verfügung zu stellen.

Durch eine Regelung der Ziehgeschwindigkeit des Trägers aufgrund der Messung der Schichtdicke der abgeschiedenen festen Phase nach Anspruch 19 ist ein hoher Automatisierungsgrad des Verfahrens zu ermöglichen und kann damit der Personalaufwand gesenkt werden.

Vorteilhaft bei einer Weiterbildung des Verfahrens nach Anspruch 20 ist, daß mit derartigen Konzentrationen der zu gewinnenden festen Phase in der Badformulierung einerseits eine gleichmäßige Abscheidung der festen Phase auf dem Träger und andererseits eine vorteilhafte Abscheidegeschwindigkeit erreicht werden kann.

Durch eine aufgerauhte Oberfläche des Trägers gemäß Anspruch 21 kann die Aufnahmefähigkeit des Trägers bzw. die Haftung der festen Phase auf dem Träger verbessert werden.

Von Vorteil ist bei einer Weiterbildung des Verfahrens nach Anspruch 22, daß die Phase vom Träger abgebürstet werden kann und dieser somit wiederverwendbar ist.

Die Aufgabe der Erfindung wird aber auch durch eine Anlage gemäß Anspruch 23 eigenständig gelöst. Von Vorteil ist dabei, daß auf einfache Art und Weise Feststofformulierungen hergestellt und an die unterschiedlichsten Bedürfnisse der Verwender derartiger Feststofformulierungen, wie beispielsweise der Bauindustrie angepaßt werden können.

Durch die Anordnung von Meßwertgebern und einer Steuer- und/oder Regeleinrichtung nach Anspruch 24 kann mit Vorteil ein hoher Automatisierungsgrad der Anlage erreicht werden.

Durch die Weiterbildung der Anlage nach Anspruch 25 kann mit Vorteil eine ungleichmäßige Konzentration der Tauchbadformulierung vermieden werden.

Vorteilhaft ist auch eine Ausbildung nach Anspruch 26, wonach es möglich ist, Feststofformulierungen herzustellen, die zumindest in bestimmten Bereichen diverse Zusatzchemikalien aufweisen.

Durch eine Fraktionierung des zerkleinerten, beladenen Trägers nach Teilchengröße gemäß Anspruch 27 kann eine optimale Abstimmung der Eigenschaften der Feststofformulierung auf diverse Verwendungen erreicht werden.

Von Vorteil ist aber auch eine Ausgestaltung nach Anspruch 28, wonach eine schonende Herstellung der festen Phasen, insbesondere von temperaturempfindlichen Feststoffen möglich ist.

Die Aufgabe der Erfindung wird weiters durch einen Feststoff nach Anspruch 29 gelöst. Von Vorteil ist dabei, daß eine Feststofformulierung zur Verfügung gestellt werden kann, welche gleichzeitig eine Wirkkomponente und eine Komponente mit beispielsweise armierender oder füllstoffartiger Wirkung aufweist.

Von Vorteil ist dabei eine Ausgestaltung nach Anspruch 30, wonach es möglich ist sämtliche zur Herstellung von Putzen benötigten Additiva mit einer einzigen Feststofformulierung zur Verfügung zu stellen. Dadurch kann der Arbeitsaufwand vor Ort, beispielsweise auf der Baustelle, reduziert werden bzw. ist es möglich, daß jeder Verarbeiter fertige, vorbestimmbare Mischungen mit einem entsprechenden Dosierverhältnis der einzelnen Chemikalien beziehen kann, wodurch Probleme, die aufgrund der Mischung vieler Chemikalien, insbesondere fester Chemikalien auftreten können, umgangen werden können.

Von Vorteil ist aber auch eine Weiterbildung nach Anspruch 31, wonach dem aufzutragenden Material, durch seine armierende Wirkung, keine zusätzlichen Werkstoffe beigemengt werden müssen.

Eine weitere Ausbildung nach Anspruch 32 beschreibt, daß das saugfähige und/oder faserartige Material gebrauchsfertig ist, d.h., daß das faserartige Material ohne Zufügung von Zusatzwerkstoffen oder Materialien aufgebracht werden kann.

Zum besseren Verständnis wird die Erfindung anhand der folgenden Figuren näher erläutert.

Es zeigen:
- Fig. 1: eine Anlage zur Gewinnung einer festen Phase aus einem Mehrkomponentensystem in schematischer, vereinfachter Darstellung;
- Fig. 2: eine Ausbildungsvariante einer erfindungsgemäßen Anlage in schematischer, vereinfachter Darstellung;

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

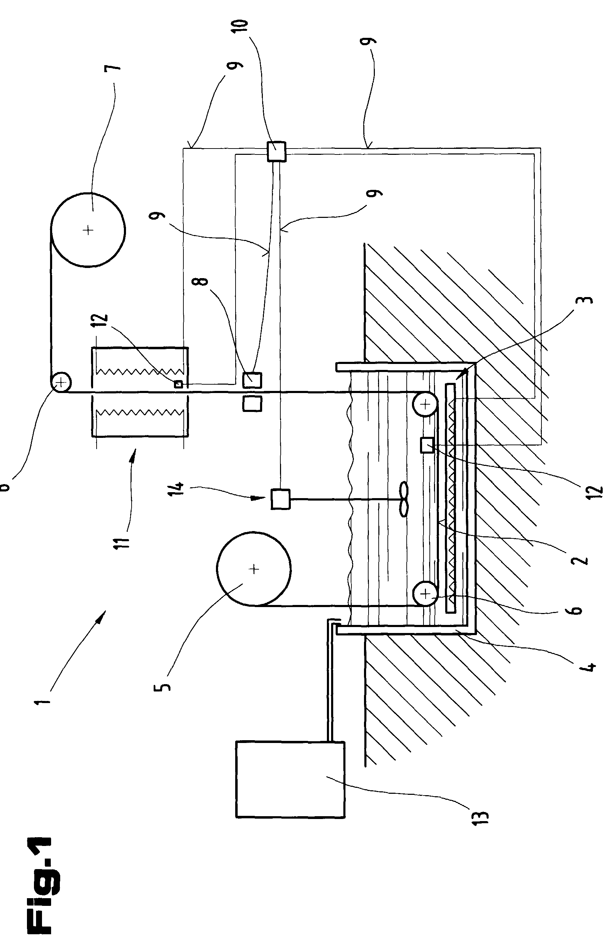

In Fig. 1 ist eine Anlage 1 zur Gewinnung einer festen Phase aus einem Mehrkomponentensystem in schematischer und vereinfachter Darstellung gezeigt.

Zur Gewinnung von Feststoffen aus Lösungen werden diese üblicherweise in Sprühtürmen versprüht und dabei mit Hilfe eines entgegenströmenden Heißluftstromes getrocknet. Derartige Verfahren sind aber mit dem Nachteil behaftet, daß einerseits ein großer Energieaufwand von Nöten ist und daß andererseits eine große Umweltbeeinträchtigung die Folge ist. Feinste Pulverteilchen, die beim Versprühen entstehen, werden mit der Warmluft nach außen geführt und müssen entweder über aufwendige Filtermethoden aus dem Warmluftstrom abgetrennt werden bzw. gelangen mit dem Warmluftstrom in die Umgebungsluft. Selbst bei der Abtrennung dieser feinsten Pulverteilchen aus dem Warmluftstrom können unter Umständen Entsorgungsprobleme auftreten, beispielsweise bei der Verwendung von Ölfiltern. Weiters besteht bei derartigen Verfahren bzw. Anlagen immer die Gefahr einer Explosion, beispielsweise einer Staubexplosion bei der Produktion.

Von der Technik her zeigt sich, daß die Substanzen, die sprühgetrocknet werden, deswegen geschädigt werden, da es an der Außenseite des Pulverteilchens durch Hitze zu einer Krustenbildung kommt. Diese Krusten gehen dann langsam in Lösung, d.h. die Produkte brauchen eine bestimmte Lösezeit, die über ihrer theoretisch zu erreichenden Lösegeschwindigkeit liegt und können dadurch nicht überall eingesetzt werden.

Weiters können aufgrund der feinen Pulverteilchen Gesundheitsschädigungen auftreten, besonders da die Pulver bei der Manipulation, Verpackung, Transport etc. in die Luft und somit auch in die Atemwege der Arbeitskräfte gelangen.

Ein weiterer Nachteil der Sprühtrocknung ist, daß damit nur Feststoffe erhalten werden können, welche weitgehend temperaturunempfindlich sind.

Um die beschriebenen Probleme zu vermeiden, umfaßt die Anlage 1 einen Träger 2, der durch eine Badformulierung 3 bewegt, insbesondere gezogen wird. Der Träger 2 kann als Vlies, Gewebe, Netz, Matte, Papier, Schwamm oder dgl. aus z.B. Fasern und/oder Fäden aus beispielsweise Cellulose, Zellstoff, Recyclingmaterialien, wie z.B. Altpapier, Kunststoffen, wie z.B. Polyethylen, Polypropylen, Celluloseacetat, Viskose bzw. Viskoseprodukten oder dgl. gebildet sein.

Die Badformulierung 3 wird von einem Behälter 4, der beispielsweise als Wanne ausgebildet sein kann, aufgenommen.

Die Badformulierung 3 kann einen oder mehrere gelöste Feststoffe enthalten. So ist es z.B. möglich, Feststoffe aus z.B. einem Vorratssilo über z.B. eine sogenannte Minusdosierung, d.h., daß die aus dem jeweiligen Vorratssilo entfernte Menge aufgrund der Gewichtsdifferenz des Vorratssilos bestimmt werden kann, in einem entsprechenden Lösungsmittel zu lösen, dadurch kann der Vorteil erreicht werden, daß das homogene Mischen mehrerer Feststoffe erleichtert wird. Andererseits ist es aber auch möglich, unverträgliche Komponenten zu mischen, beispielsweise anionische mit kationischen Komponenten.

Selbstverständlich ist es auch möglich, daß bereits vorhandene Lösungen entsprechend gemischt werden.

Da bevorzugt ein bahnförmiger Träger 2 verwendet wird, umfaßt die Anlage 1 weiters Mittel zur Bereitstellung, Führung, Abstützung und Aufnahme des Trägers 2. So kann beispielsweise eine Abwickelrolle 5, von welcher der unbehandelte Träger 2 abgespult werden kann und zumindest eine Umlenkrolle 6 sowie zumindest eine Aufwickelrolle 7 in der Anlage 1 angebracht sind.

Da der Träger 2 auch mehrfach eine Richtungsänderung erfahren kann, kann die Anlage 1 selbstverständlich mehrere Umlenkrollen 6 umfassen. So ist es beispielsweise möglich, daß im Behälter 4 zwei Umlenkrollen 6 angeordnet sind, sodaß der Träger 2 in einer annähernd horizontalen Lage durch die Badformulierung 3 gezogen werden kann.

Um die Dimensionen der Anlage 1 gering halten zu können bzw. um überschüssige, vom Träger 2 abtropfende Badformulierung 3 einfach auffangen zu können, kann der Träger 2 beim Verlassen der Badformulierung 3 bevorzugt um zumindest annähernd 90° umgelenkt werden. Dadurch kann erreicht werden, daß überschüssige Badformulierung 3 vom Träger in den Behälter 4 gebracht wird und steht diese somit zur Aufnahme durch einen noch unbehandelten Teil des Trägers 2 wieder zur Verfügung.

Da der Träger 2 bevorzugt aus saugfähigen Materialien gefertigt ist und unter Umständen eine aufgerauhte Oberfläche zur Erhöhung der Saugfähigkeit bzw. zur Verbesserung der Haftung der Badformulierung 3 bzw. der darin enthaltenen, insbesondere gelösten festen Phase auf dem Träger 2 aufweist, nimmt der Träger 2 während der Bewegung durch die Badformulierung 3 eine vorbestimmbare Menge dieser Badformulierung 3 auf. Die gewünschte aufzunehmende Menge kann dabei über die Geschwindigkeit, mit der der Träger 2 durch die Badformulierung 3 bewegt wird, insbesondere die Ziehgeschwindigkeit geregelt werden. So nimmt der Träger 2 normalerweise um so weniger Badformulierung 3 auf je schneller er durch letztere bewegt wird. Andererseits ist es natürlich möglich, daß insbesondere dann, wenn der Träger 2 durch eine Badformulierung 3 mit erhöhter Viskosität bewegt wird, daß von dieser auf dem Träger 2 mehr haften bleibt und somit eine geringere Menge an Badformulierung 3 durch erhöhte Ziehgeschwindigkeit erreicht werden kann.

Um eine automatische Regelung bzw. Nachjustierung der Geschwindigkeit zu ermöglichen kann beispielsweise nach dem Austritt des Trägers 2 aus der Badformulierung 3 ein Meßgerät 8 zur Messung der Schichtdicke bzw. der Gesamtdicke der beladenen Trägerbahn angeordnet sein. Dieses Meßgerät 8 kann über eine Leitung 9 mit einer Steuer- und/oder Regeleinrichtung 10 in Verbindung stehen, welche ihrerseits wiederum über Leitungen 9 mit den Antriebsmotoren für die einzelnen Mittel zur Führung und Aufnahme des Trägers 2 in Verbindung stehen kann (in Fig. 1 nicht gezeigt). Eine Regelung ist beispielsweise so möglich, daß in der Steuer- und/oder Regeleinrichtung 10 ein konstanter Wert für die Dicke des unbeladenen Trägers 2 hinterlegt ist und sich somit aufgrund der Differenz der Dicke des unbehandelten zum beladenen Träger 2 ein numerischer Wert ergibt, der zur Geschwindigkeitsregelung herangezogen werden kann. Andererseits ist es natürlich auch möglich, daß im Bereich der Abwickelrolle 5 ebenfalls ein Meßgerät 8, welches mit der Steuer- und/oder Regeleinrichtung 10 in Verbindung steht, vorhanden ist (in Fig. 1 nicht gezeigt) und daß damit wiederum durch beispielsweise Differenzbildung der gemessenen Werte für die Dicke des unbehandelten bzw. beladenen Trägers 2 ein Wert zustande kommt, mit welchem die Regelung der Geschwindigkeit des Trägers 2 durch die Badformulierung 3 möglich ist.

Selbstverständlich können auch andere Methoden zur Regelung bzw. Steuerung der Geschwindigkeit, mit der der Träger 2 durch die Badformulierung 3 bewegt wird, herangezogen werden, beispielsweise basierend auf der Gewichtsdifferenz zwischen dem unbeladenen und dem beladenen, bahnförmigen Träger 2.

Da der so beladene Träger 2 nach wie vor einen bestimmten Feuchtigkeitsgehalt aufweist, ist es möglich, daß im Anschluß an den Behälter 4 eine Trockenstrecke 11 angeordnet ist. Diese Trockenstrecke 11 kann dabei beispielsweise als Lufttrockenstrecke ausgebildet sein, sodaß eine schonende Trocknung ohne besonderen Energieaufwand möglich ist.

Ebenso ist es natürlich möglich, beispielsweise zur Verkürzung der Trockenzeit, daß anstelle bzw. zusätzlich zu dieser Lufttrockenstrecke die Trockenstrecke 11 beispielsweise einen Konvektionstrockner, einen Strahlungstrockner oder dgl. umfaßt. Der Konvektionstrockner kann dabei z.B. mit erwärmten Gas, wie z.B. Luft betrieben werden, wobei zur Erwärmung des Gases jede beliebige Heizquelle, wie z.B. Strom, Gas, Öl oder dgl. herangezogen werden kann. Andererseits ist es auch möglich, daß die Anlage 1 einen beliebigen Wärmetauscher geeigneter Bauart umfaßt und damit eine Ubertragung der Wärme, welche in der Abluft aus der Anlage 1 enthalten ist auf frisch zugeführtes Trocknungsmedium erfolgen kann.

Insbesondere bei der Konvektionstrocknung ist es aber auch möglich, z.B. wenn aus der Umgebung angesaugte Frischluft als Trockengas benutzt wird, einen Teil der den Trockner verlassende Abluft vermischt mit Frischluft in den Trockner zurückzuführen. Bei diesen sogenannten Umluftverfahren können klimatisch bedingte Schwankungen im Frischluftzustand durch Anpassung des Mischungsverhältnisses von Frischluft und Umluftstrom ausgeglichen werden.

Weiters ist es möglich, daß die Trockenstrecke 11 sogenannte Strahlungstrockner umfaßt. So können beispielsweise entlang zumindest eines Teils der Trockenstrecke 11 ein oder mehrere Infrarot-Trockner angeordnet sein, welche eine Wärmestrahlung abgeben, mit deren Hilfe an dem Träger 2 bzw. dem darauf abgeschiedenen Feststoff anhaftendes Lösungsmittel verdampft und somit entfernt werden kann. Die Infrarot-Trockner können dabei wiederum mit Strom, Gas, Öl oder dgl. als Primärenergiequelle betrieben werden. Ebenso ist es möglich, daß entlang der Trockenstrecke 11 beispielsweise Widerstandsheizgeräte angeordnet sind.

Ebenso ist es möglich, daß die Trocknung des beladenen Trägers 2 mit Hilfe einer Hochfrequenztechnik durchgeführt wird, dazu können an geeigneter Stelle der Sender bzw. der Empfänger, die beispielsweise als Netze ausgeführt sein können, angeordnet sein, sodaß sich dazwischen ein Wechselfeld hoher Frequenz ausbilden kann. Beispielsweise ist es möglich den Sender bzw. den Empfänger oberhalb bzw. unterhalb des beladenen Trägers 2 anzuordnen. Durch die ständige Umpolung können bei Verwendung polarer Lösungsmittel, wie beispielsweise Wasser, diese der jeweiligen Polarisierung folgen, sodaß eine ständige Umorientierung der einzelnen Moleküle erfolgt. Dabei kann soviel Energie übertragen werden, daß das Lösungsmittel verdampft und ist es auf vorteilhafte Weise möglich, den Energieeintrag auf nicht zu verdampfende Komponenten bzw. Phasen zu minimieren bzw. auszuschließen. Beispielsweise kann das Lösungsmittel aufgrund von Molekülstößen bzw. innerer Reibung aufgrund der Oszillation der Moleküle und zwischen den Elektroden verdampfen.

Selbstverständlich ist es auch möglich, daß anstelle der Netze der Sender bzw. der Empfänger beliebig andersartige geeignete Ausbildungen aufweisen. Vorteilhaft ist es, daß bei dieser Hochfrequenztechnik unter Umständen Leistungen, welche im Bereich zwischen 2 kW und 10 kW, bevorzugt 5 kW liegen, ausreichen können.

Selbstverständlich kann der beladene Träger 2 mehrstufig mit Hilfe von mehreren Einzeltrocknern getrocknet werden.

Nach der Trockenstrecke 11 kann wiederum eine Umlenkrolle 6 angebracht sein, über die der nun trockene Träger 2 beispielsweise einer Aufwickelrolle 7 zugeführt wird. Die Anzahl und die Anordnung dieser Umlenkrollen 6 kann sich dabei nach der jeweiligen Ausbildung bzw. Anordnung der Einzelbestandteile der Anlage 1 richten und ist deren Anordnung insbesondere nicht beschränkt auf die in Fig. 1 gezeigt Variante der erfindungsgemäßen Anlage 1.

Selbstverständlich ist es ebenso möglich, daß der Trockenstrecke 11 mehrere Umlenkrollen 6 zugeordnet sind, sodaß der zu trocknende Träger 2 bzw. der darauf abgeschiedene Feststoff durch mehrmalige Richtungsänderung eine längere Verweilzeit in der Trockenstrecke 11 hat.

Der nunmehr trockene bzw. annähernd trockene Träger 2 kann vorerst auf der Aufwickelrolle 7 aufgewickelt und auf dieser für eine etwaige Nachbearbeitung zwischengelagert werden. Dazu ist es möglich, die Aufwickelrolle 7 in bestimmten Intervallen durch eine leere Aufwickelrolle 7 zu ersetzen.

Weiters ist es selbstverständlich möglich, daß eine direkte Feuerung zur Trocknung des Trägers 2 in der Trockenstrecke 11 vorgenommen wird. Es sollte bei der Trocknung jedenfalls darauf geachtet werden, daß nur das Lösungsmittel und nicht die gewünschte feste Substanz verdampft.

Die Länge der Trockenstrecke 11 kann der zur Verfügung stehenden oder gewählten Energie und der notwendigen, gegebenenfalls niederen Temperatur, welche zur Trocknung eingestellt werden kann, aufgrund der Materialkenndaten angepaßt werden. Anfallende Restenergie von Strom oder Wärmeproduktionsgeräten kann, wie bereits erwähnt, über Wärmetauscher wiederverwendet werden.

Als vorteilhaft kann es sich erweisen, wenn bei der thermischen Trocknung eine Temperatur im Bereich zwischen 50°C bis 100°C, bevorzugt 60°C bis 80°C für temperaturempfindliche feste Phasen eingestellt wird.

Selbstverständlich ist es auch möglich, die Aufwickelrolle 7 als Distributionsmittel zu verwenden und den mit der oder den festen Phasen beladenen Träger über dieses Distributionsmittel einem Endverbraucher zuzuführen.

In diesem Zusammenhang soll es nicht unerwähnt bleiben, daß der mit den festen Phasen beladene Träger 2 vorerst auf diesem Distributionsmittel gesammelt werden kann und die Trocknung damit chargenweise in z.B. Trockenkammern mit bereits erwähnten Trocknern durchzuführen. Andererseits ist es auch möglich, anstelle einer Aufwickelrolle 7 als Distributionsmittel, z.B. einen quaderförmiger Behälter mit beliebigen Querschnitt, beispielsweise rechteckig, quadratisch oder dgl. zu verwenden. Dazu kann dieser Behälter beweglich abgestützt sein, sodaß durch zyklisches hin und her bewegen dieses Behälters der beladene Träger 2 darauf als lange Bahn annähernd horizontal gesammelt werden kann und ist es zudem möglich, diesen Behälter zusammen mit dem beladenen Träger 2 einer Trocknung zu unterziehen.

Selbstverständlich können anstelle des Behälters beispielsweise Paletten, wie Europaletten oder dgl. verwendet werden.

Zur weiteren Automatisierung können in der Anlage 1, beispielsweise im Behälter 4, in der Trockenstrecke 11 etc. Temperaturmeßgeräte 12, z.B. Kontaktthermometer, Widerstandsthermometer oder dgl. angeordnet und über Leitungen 9 mit der Steuer- und/oder Regeleinrichtung 10 verbunden sein. Dadurch kann eine automatische Überwachung der jeweiligen Temperaturen erfolgen und ist, sofern die Steuer- und Regeleinrichtung 10 mit den wärmeerzeugenden Vorrichtungen der Anlage 1, wie z.B. einer fakultativ im Behälter 4 angebrachten Heizung bzw. der Vorrichtungen zur Trocknung des beladenen, bahnförmigen Trägers 2 verbunden ist, eine automatische Steuerung möglich. Damit kann eine eventuelle Überhitzung vermieden werden, sodaß mit der erfindungsgemäßen Anlage 1 auch temperaturempfindliche feste Phasen gewonnen werden können.

Weiters ist es natürlich möglich, daß die Steuer- und/oder Regeleinrichtung 10 mit einem Füllstandsmeßgerät, welches im Bereich des Behälters 4 angeordnet sein kann (in Fig. 1 nicht dargestellt), verbunden ist, sodaß damit ein automatisches Nachfüllen der Badformulierung 3, beispielsweise aus einem Vorratsbehälter 13 möglich ist und wodurch bei einer allfällig angeordneten Beheizung für den Behälter 4 eine Überhitzung der Badformulierung 3 vermieden werden kann.

Es ist aber auch möglich, daß die Badformulierung 3 mehrere feste Phasen entweder im gelösten Zustand oder beispielsweise im dispergierten Zustand oder dgl. enthält. Auf diese Weise wird es nämlich möglich, daß, wenn z.B. Additiva für die Bauindustrie hergestellt werden, die Badformulierung 3 sämtliche notwendigen Zuschläge für z.B. Zement oder dgl. enthält. Damit kann nicht nur eine vereinfachte Handhabung vor Ort, d.h. auf der jeweiligen Baustelle erreicht werden, sondern ist damit auch eine Verbesserung der einheitlichen Zusammensetzung der Additivmischung möglich, sodaß diese in beliebig auswählbaren Volumina annähernd die gleichen Eigenschaften aufweisen kann.

Für den Fall, daß die Badformulierung 3 aus mehreren gelösten festen Phasen oder aus in der jeweiligen Flüssigkeit dispergierten Phasen besteht, kann zur Erreichung der Vereinheitlichung, d.h. zur Verminderung von Konzentrationsunterschieden in bezug auf die Querschnittfläche des Behälters 4, letzterem ein Mittel z.B. ein Rührwerk 14 zugeordnet sein, mit dessen Hilfe die Badformulierung 3 kontinuierlich oder diskontinuierlich in Bewegung gehalten werden kann. Zur Steuerung der Antriebsvorrichtung des Rührwerks 14, beispielsweise eines elektrischen Motors kann dieser ebenfalls über Leitungen 9 mit der Steuer- und/oder Regeleinrichtung 10 verbunden sein und ist damit eine Anpassung an die jeweiligen Erfordernisse automatisch möglich.

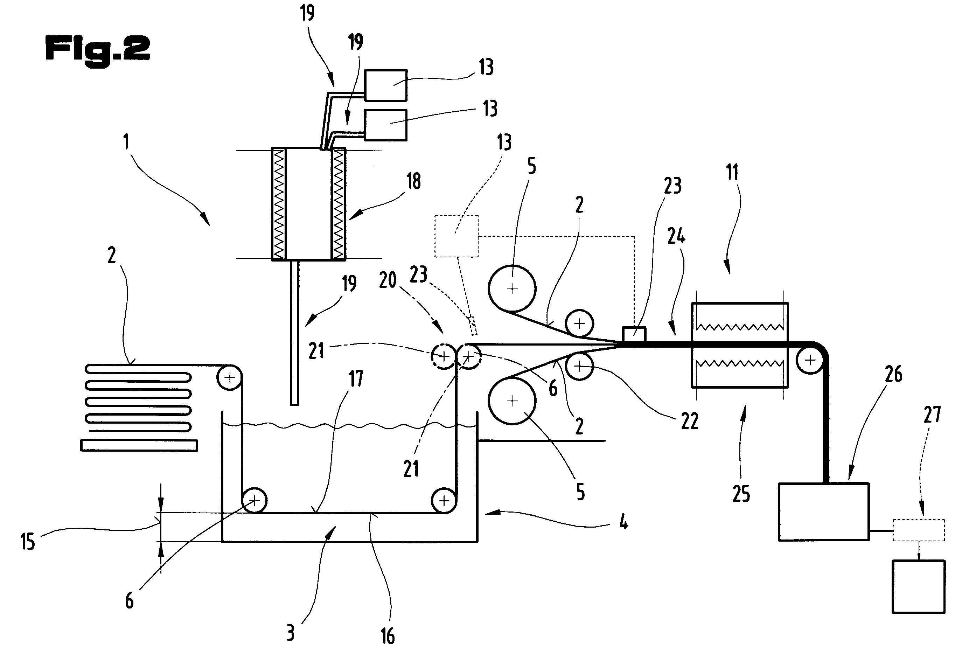

In Fig. 2 ist eine weitere Ausführungsvariante der erfindungsgemäßen Anlage 1 in schematisch vereinfachter Darstellung gezeigt.

Der bahnförmige Träger 2 wird im Gegensatz zur Ausführungsvariante der Fig. 1 nicht von einer Abwickelrolle 5 bereitgestellt, sondern kann dieser von beispielsweise einer Palette, auf der der Träger 2 flächig gelagert ist, entnommen werden. Wie bei voranstehender Ausführungsvariante beschrieben, wird der bahnförmige Träger 2 mit Hilfe von mehreren Umlenkrollen 6, die zum Teil angetrieben sein können bzw. eine Oberfläche aufweisen können, welche die Übertragung einer Zugkraft auf den Träger 2 ermöglicht, durch die Anlage 1 bewegt, insbesondere wird dieser wiederum durch die Badformulierung 3 im Behälter 4 zumindest annähernd horizontal hindurchgeführt, sodaß eine Beladung mit den im jeweiligen Lösungsmittel gelösten festen Phasen bzw. darin dispergierten festen Phasen zusammen mit dem Lösungsmittel, z.B. Wasser oder der entsprechenden Flüssigkeit möglich ist. Selbstverständlich können aber auch andere Bewegungsrichtungen im Behälter 4 gewählt werden, beispielsweise vertikal oder aber ist auch ein mehrmaliges Umlenken des Trägers 2 in der Badformulierung 3 möglich.

Der Behälter 4 bzw. die Badformulierung 3 kann selbstverständlich wiederum beheizt sein, wobei die dabei entstehende Wärmeströmung auch zur Verteilung von eventuell dispergierten Phasen bzw. zur Herstellung einer einheitlichen Konzentration über das gesamte Volumen der Badformulierung 3 herangezogen werden kann bzw. ist es auch möglich, daß dem Behälter 4 besagte Mittel, beispielsweise das Rührwerk 14, zur Bewegung der Badformulierung 3 zugeordnet sind. Zur besseren Übersichtlichkeit wurde jedoch auf die Darstellung derartiger Mittel verzichtet und sind auch diverse Meßwertgeber bzw. die Steuer- und/oder Regeleinrichtung 10 in der Fig. 2 nicht dargestellt, können jedoch je nach Erfordernis an den entsprechenden Bereichen angeordnet sein.

Die Dicke der auf dem Träger 2 abgeschiedenen Badformulierung 3 kann wiederum über die Ziehgeschwindigkeit des Trägers 2 durch die Badformulierung 3 geregelt werden.

Von Vorteil erweist es sich auch, wenn der bahnförmige Träger 2 in einer Höhe 15 durch die Badformulierung 3 bewegt wird, in welcher der Druck auf eine der Aufstandsfläche des Behälters 4 zugewandten Unterfläche 16 des Trägers 2 in etwa gleich groß ist dem Druck, insbesondere dem hydrostatischen Druck auf eine Oberfläche 17 des bahnförmigen Trägers 2. Durch eine derartige Anordnung kann eine gleichmäßige beidseitige Beladung des Träges 2 mit der Badformulierung 3 erreicht werden. Die Menge auf dem Träger 2 aufgebrachter Badformulierung 3, insbesondere der darin gelösten und/oder dispergierten festen Phasen kann aber auch durch die jeweiligen Konzentrationen in der Badformulierung selbst reguliert werden. Die Summe der Konzentrationen der festen Phasen in der Badformulierung 3 kann dabei im Bereich zwischen 5 Gew.-% und 90 Gew.-%, bevorzugt 20 Gew.-% und 50 Gew.-% betragen.

Um eine bestimmte gewünschte Konzentration des jeweiligen Stoffes in der Badformulierung 3 zu erreichen, ist es möglich, die in dem oder den Vorratsbehälter(n) 13 gelagerten Rohstoffe einer Vorrichtung zur Konzentrationserhöhung, beispielsweise einem Eindicker 18 zuzuführen. Der Eindicker 18 kann mit bereits erwähnten Mitteln, beispielsweise durch Direktbefeuerung, durch Beheizung mittels Dampf, durch Beheizung mittels elektrischen Strom oder dgl. auf ein Temperaturniveau gebracht bzw. auf diesem gehalten werden, welches eine Teilverdampfung des jeweiligen Lösungsmittels ermöglicht. Die Verbindung zwischen den Vorratsbehältern 13 und dem Eindicker 18 bzw. dem Eindicker 18 und dem Behälter 4 kann über den Stand der Technik entsprechende Kanäle 19, z.B. Rohrleitungen erfolgen.

Die zu verarbeitenden Rohstoffe können entweder einzeln mit einem Eindicker 18 aufkonzentriert werden bzw. ist es auch möglich, die einzelnen Rohstoffe in einem Mischbehälter vorzumischen und diese Mischung dann aufzukonzentrieren. Selbstverständlich ist es aber auch möglich, besonders für temperaturempfindliche feste Phasen, daß diese dem Behälter 4 direkt zugeführt werden und das andere temperaturunempfindliche feste Phasen vorher beispielsweise mit dem Eindicker 18 aufkonzentriert werden (in Fig. 2 nicht dargestellt).

Es besteht natürlich auch die Möglichkeit, daß die Anlage mehrere Vorrichtungen zur Konzentrationserhöhung, insbesondere jeweils einer pro Vorratsbehälter 13 aufweist.

In diesem Zusammenhang soll jedoch nicht unerwähnt bleiben, daß es auch möglich ist, bereits vorliegende Feststoffe erneut in der Badformulierung 3 zu lösen bzw. zu verteilen, beispielsweise zu dispergieren.

Andererseits ist es auch möglich, daß die Badformulierung 3 eine sol- bzw. gelartige Konsistenz aufweist, wodurch mit relativ geringer Geschwindigkeit des Trägers 2 relativ dicke Beschichtungen mit festen Phasen ermöglicht werden können.

Vorteilhafter Weise verläßt der Träger 2 die Badformulierung 3 in annähernd vertikaler Richtung, beispielsweise über eine Umlenkrolle 6, um dabei ein Abtropfen der überschüssigen Badformulierung 3 in den Behälter 4 zu ermöglichen. Es ist aber auch möglich, daß der Träger 2 beispielsweise über Schlitze in der Behälterwandung aus dem Behälter 4 geführt wird und daß dabei gleichzeitig überschüssige Badformulierung 3 abgestreift wird.

Zur eventuellen Vortrocknung kann der Träger 2 beispielsweise über zumindest eine mechanische Trockenvorrichtung 20 geführt werden (in Fig. 2 strichpunktiert angedeutet). Diese kann beispielsweise aus zwei Walzen 21 aufgebaut sein und läßt sich damit der Feuchtegehalt des geladenen Trägers 2 über den Anpreßdruck, welcher durch die Spaltbreite zwischen den beiden Walzen 21 geregelt werden kann, an die jeweiligen gewünschten Erfordernisse anpassen.

Anstelle der Trockenvorrichtung 20 kann aber selbstverständlich wiederum eine Umlenkrolle 6 vorhanden sein.

Zur weiteren Vortrocknung bzw. um den oder die auf dem Träger 2 abzuscheidenden festen Phasen vor äußeren Umwelteinflüssen zu schützen, besteht die Möglichkeit, daß im Anschluß an den Behälter 4 zumindest eine, vorzugsweise zwei Abwickelrollen 5 angebracht sind. Auf diesen Abwickelrollen 5 kann sich dabei wiederum besagter Träger 2, bevorzugt gleicher Art, befinden und ist dadurch, insbesondere wenn der mit der Badformulierung 3 beladene Träger 2 mittig geführt wird, eine beidseitige Umhüllung mit trockenem Träger 2 möglich. Für das Zusammenführen der nunmehr drei bahnförmigen Trägern 2 können beispielsweise Anpreßrollen 22 vorgesehen sein, mit deren Hilfe ein oberflächiger Schluß zwischen den einzelnen Trägern 2 möglich ist. Mit dem eingestellten Rollendruck kann zudem auch die aufgenommene Menge der Badformulierung 3 eingestellt werden.

Selbstverständlich ist es möglich, dem mit der Badformulierung 3 beladenen Träger 2 einen oder mehrere trockene Träger 2 zuzuführen bzw. ist es auch möglich, insbesondere bei Verwendung mehrerer Behälter 4, daß mehrere beladene Träger 2 zusammengeführt bzw. daß das daraus gebildete Laminat wiederum zumindest einseitig vom trockenen Träger 2 abgedeckt wird.

Die trocken zugeführten Träger 2 saugen die vom ersten durch die Badformulierung 3 bewegten Träger 2 aufgenommene Flüssigkeit auf und stellt sich damit ein gleichmäßiger Flüssigkeitsgehalt zwischen den drei Bahnen ein.

Selbstverständlich ist es zur schnelleren Trocknung auch möglich, das nunmehr mehrschichtige Laminat einer mechanischen Vortrocknung, wie oben beschrieben, zu unterziehen.

In diesem Zusammenhang soll erwähnt werden, daß es auch möglich ist, wie dies strichliert in Fig. 2 angedeutet ist, daß im Bereich vor oder nach der Anpreßrollen 22 also im Bereich des einschichtigen, bahnförmigen Trägers 2 bzw. im Bereich des dreischichtigen Laminats aus Trägern 2 Mittel, wie z.B. Düsen 23 angebracht sein können, welche mit einem weiteren Vorratsbehälter 13 in Verbindung stehen. Dadurch wird es möglich zusätzliche Chemikalien auf die beiden äußeren Träger 2 bzw. auf dem mittig geführten Träger 2 und damit auch auf die jeweilige abzuscheidende feste Phase aufzubringen und ist damit beispielsweise die Einstellung einer gewünschten Wirkungsweise des abzuscheidenden Feststoffes bzw. des erzeugten Produktes möglich. Es können damit aber auch unverträgliche Komponenten, wie z.B. anionische und kationische gleichzeitig einem Endverbraucher auf einem Träger zur Verfügung gestellt werden.

Das dreischichtige Laminat aus Trägern 2 kann in der Folge über eine Trockenstrecke 11 geführt werden, welche zum Beispiel einen Bereich 24, in welchem das Laminat (bzw. ein einzelner beladener Träger 2) mit Luft vorgetrocknet wird und einen daran anschließenden Trockenbereich 25 zur thermischen Endtrocknung des Laminats (bzw. des Einzelträgers) umfaßt. Der Trockenbereich 25 kann dabei wiederum bereits beschriebene Vorrichtungen zur Trocknung, beispielsweise zur Konvektions- und/oder Strahlungstrocknung umfassen.

Die Trocknung, d.h. die Temperatur kann so eingestellt werden, daß entweder oberflächlich gebundene Feuchtigkeit oder aber auch sogenanntes Kristallwasser entfernt wird. Im letzteren Fall ist es beispielsweise möglich, insbesondere dann, wenn es sich um hygroskopische feste Phasen handelt, daß zum Schutz dieser weiteren Chemikalien, beispielsweise aufgesprüht werden, die eine erneute Feuchtigkeitsaufnahme vermeiden bzw. vermindern.

Das eine bestimmte Endfeuchte aufweisende, die Trockenstrecke 11 verlassende Produkt kann entweder, wie bereits bei der Ausführungsvariante der Fig. 1 erwähnt einem Distributionsmittel zur Lagerung oder zum Versand zugeführt werden bzw. ist es auch möglich, den beladenen Träger 2 bzw. das Laminat einer Zerkleinerungsvorrichtung 26 beispielsweise einem Schredder einer Mühle, einer Haspel, einem Schneidwerkzeug oder dgl. zuzuführen. Dadurch wird es möglich, den beladenen, bahnförmigen Träger 2 in z.B. für die Bauindustrie gebrauchsfertige Partikel zu zerkleinern, wobei sich die Partikelgröße an den jeweiligen Verwendungszweck anpassen kann. So ist es beispielsweise möglich, mit Hilfe von Mühlen feine, pulverförmige feste Phasen zu erhalten bzw. ist es andererseits möglich, den beladenen Träger 2 auf Streifen bestimmter Größe und/oder Flocken unterschiedlichster Größe und Gestalt zu zerteilen.

In der Folge können die die Zerkleinerungsvorrichtung 26 verlassenden Feststoffe einer Fraktioniervorrichtung 27 (in Fig. 2 strichliert dargestellt) zugeführt werden und ist es damit möglich Fraktionen bestimmter Teilchengröße zu erhalten, sodaß damit dem Endverbraucher ein Produkt zur Verfügung gestellt werden kann, welches im wesentlichen einheitliche Eigenschaften aufweist.

Die Feststoffe können letztendlich in einem Vorratsbehälter 13 zwischengelagert bzw. in endverbrauchergerechte Gebinde, wie beispielsweise Säcke abgefüllt werden.

Mit einer derartigen erfindungsgemäßen Anlage 1 können auf einfache Art und Weise Wachsmittel, Luftporenbildner, Tenside, Entschäumer, Verdicker oder ähnliche Chemikalien in Pulverform überführt werden und ist damit eine schonende umweltverträgliche Trocknung ohne die Belastung der Umwelt mit eventuell mitgerissenen Feinststäuben möglich.

Die so gewonnen Produkte sind üblicherweise einfach zu verarbeiten, staubfrei, leicht zu dosieren und können in Abhängigkeit vom gebildeten Trägermaterial bzw. in Abhängigkeit von der gewählten Partikelgröße bzw. des Zerkleinerungsgrades eine armierende Wirkung, z.B. auf Putze oder dgl. aufweisen. Von besonderem Vorteil erweist es sich in diesem Zusammenhang, wenn ein Verhältnis Gewicht Träger 2 zu Gewicht Trockenchemikal von ca. 1 : 1 eingestellt wird.

Die mit einer derartigen Anlage 1 hergestellten festen Phasen weisen im Vergleich zur üblichen Sprühtrocknung den Vorteil auf, daß deren Oberfläche aufgrund einer negativ wirkenden Temperatureinwirkung im Sprühturm nicht verkrustet bzw. glasiert ist. Damit kann der Vorteil erreicht werden, daß einerseits nahezu 100 % an Wirksubstanz zur Verfügung stehen, sodaß insgesamt die zu transportierende Menge verringert werden kann und andererseits ist aufgrund der genaueren Dosierungsmöglichkeit eine bessere, einheitlichere Verteilung derartiger Additiva in z.B. einen daraus hergestellten Fertigprodukt, wie z.B. Putzen möglich. Da die Oberfläche der so gewonnen festen Phasen thermisch nicht inaktiviert wurde, weisen mit einem derartigen Verfahren bzw. einer derartigen Anlage 1 hergestellten festen Phasen ein Löslichkeitsverhalten auf bzw. eine Lösegeschwindigkeit auf, die nahe an den zu erreichenden theoretischen Werten heranreichen kann und kann die Lösegeschwindigkeit gegenüber mit Sprühtürmen hergestellten Pulvern deutlich verbessert werden. Die mit einer derartigen Anlage 1 erzeugten festen Phasen können zudem eine Oberfläche aufweisen, die von der Kugelform abweichen kann, sodaß damit ein Verhältnis von Oberfläche zu Volumen eingestellt werden kann, welches sich günstig auf die Lösegeschwindigkeit auswirkt. Bekanntlich weist die Kugelform im Vergleich zu anderen Raumformen die kleinste Oberfläche bei gleichem Volumen auf. Neben diesen Vorteilen ist es zudem mit Vorteil möglich, sogenannte Sekundärrohstoffe, wie z.B. Altpapier als Träger 2 einzusetzen, womit insgesamt die Umwelt, insbesondere Primärrohstoffe geschont werden können.

Aufgrund der Staubfreiheit der erzeugten festen Phasen kann aber auch die Gesundheit, insbesondere die Atemwege, der Verwender derartiger Produkte geschont werden.

Zusätzlich soll nicht unerwähnt bleiben, daß aufgrund der Konzentrierung Transportvolumen und damit auch Transportkosten eingespart bzw. gesenkt werden können.

Es ist weiters auch möglich, mit einer derartigen Anlagen 1 bzw. einem im folgenden beschriebenen Verfahren Chemikalien in flüssiger Form vor Produktion für jeden Betrieb speziell zu mischen, sodaß am Ende ein einziges Additiv eingesetzt werden kann. Dieses Additiv erfüllt nunmehr die Funktionen vieler, bisher einzeln einzusetzender und zu dosierenden Chemikalien bzw. kann die damit verbundenen Schwierigkeiten der Dosierungsgenauigkeit und der langen Einwiegezeit verbessern.

Besonders in der Bauindustrie kann mit derartig hergestellten festen Phasen der Vorteil erreicht werden, daß aufgrund der schnellen Auflösung in der jeweiligen Mischung bzw. im sogenannten Anmachwasser eine spätere Nachverflüssigung bzw. ein erhöhter Wasserbedarf vermieden werden kann, welcher beispielsweise durch das zeitverzögerte Auflösen zugesetzter Additiva entstehen kann.

Als Verfahren für die Herstellung der festen Phasen aus einem Mehrkomponentensystem hat sich folgende Vorgangsweise als vorteilhaft erwiesen.

Der bahnförmige Träger 2 wird mit Hilfe von Stütz- und/oder Führungsmittel zumindest bereichsweise durch ein Bad, insbesondere eine Badformulierung 3 in einem Behälter 4 geführt, wobei sich eine bestimmbare Menge an Badformulierung 3 auf den Träger 2 abscheidet. Die abgeschiedene Menge richtet sich dabei u.a. nach der Konzentration der Badformulierung 3, nach der Ziehgeschwindigkeit des Trägers 2 durch die Badformulierung 3, nach der Behältergröße, insbesondere der Länge des Behälters 4 sowie nach dem auf dem Träger 2 einwirkenden Druck in der Badformulierung 3.

Der Träger 2 kann über geeignete Mittel, wie beispielsweise Abwickelrollen 5, Paletten oder dgl. zur Verfügung gestellt werden.

Als Träger 2 können Matten, Vliese, Gewebenetze, Papiere oder dgl. aus Fasern und/oder Fäden aus z.B. Cellulose, Zellstoff, Recyclingmaterial, wie z.B. Altpapier, Kunststoff, wie z.B. Polyethylen, Polypropylen, Celluloseacetat oder dgl. verwendet werden.

Der Träger 2 wird dabei mit Hilfe von beispielsweise Umlenkrollen 6 durch die Anlage 1 bewegt bzw. von diesen abgestützt.

In der Folge kann der Träger 2 einer Trockenstrecke 11 zugeführt werden, welche wiederum einen Bereich 24 mit Lufttrocknung und einen Trockenbereich 25 zur thermischen Trocknung umfassen kann.

Mit Hilfe dieser Trockenstrecke 11 kann ein bestimmter Feuchtegehalt des Trägers 2 bzw. der daran anhaftenden festen Phasen eingestellt werden. Als vorteilhaft hat es sich erwiesen, wenn die Trocknung mit sogenannte Konvektionstrockner mit z.B. einem erwärmten Gas, wie z.B. Luft und/oder Strahlungstrockner, wie z.B. Infrarot-Trockner, elektrischen Widerstandsheizungen oder dgl. erfolgt. Für temperaturempfindliche Feststoffe kann dabei die Temperatur im Bereich zwischen Raumtemperatur, z.B. 20°C, bis 150°C, bevorzugt 60°C bis 80°C liegen, wobei sich die Temperatur nach dem jeweiligen Feststoff richten kann.

Ebenso kann natürlich vorab beschriebene Hochfrequenzmethode zur Trocknung des bzw. der Träger 2 herangezogen werden.

Es ist möglich, daß vor der Trockenstrecke 11 eine mechanische Vortrocknung, z.B. mit einer Trockenvorrichtung 20 erfolgt, sodaß der Wärmebedarf bei einer allfälligen thermischen Endtrocknung vermindert werden kann.

Weiters ist es möglich, daß dem beladenen Träger 2 vor der Trockenstrecke 11 beidseitig weitere Träger 2, bevorzugt der gleichen Art, hinzugeführt werden, z.B. um diesen vor äußeren Umwelteinflüssen zu schützen. Dazu ist es möglich, die beiden zusätzlichen Träger 2 mit Hilfe von Anpreßrollen 22 auf den beladenen, mittigen Träger 2 anzupressen und ist damit gleichzeitig eine Feuchtigkeitsverminderung, welche sich aufgrund des Anpreßdruckes vorbestimmen läßt, zu erreichen.

Die Badformulierung 3 kann selbstverständlich mehrere fest Phasen gelöst und/oder verteilt, z.B. dispergiert aufweisen. Zur Vereinheitlichung der Konzentration über das gesamte Volumen der Badformulierung 3 ist es dazu möglich, daß die Badformulierung 3 in gewissen Zeitabständen diskontinuierlich oder kontinuierlich während des Durchbewegens des Trägers 2 durch die Badformulierung 3 mit Hilfe von beispielsweise einem Rührwerk 14 gerührt wird.

Selbstverständlich ist es möglich, daß die flüssigen Rohstoffe mit Hilfe von beispielsweise Eindickern 18 vor deren Einsatz als Badformulierung 3 aufkonzentriert werden.

Zur Vermeidung einer ungleichmäßigen und/oder frühzeitigen Kristallisation der gelösten Phase bzw. Phasen auf dem Träger 2 kann die Badformulierung 3 auf einen gegenüber der Umgebungstemperatur erhöhtem Temperaturniveau gehalten werden.

Weiters ist es möglich, daß im Anschluß an den Behälter 4 z.B. über Düsen 23 weitere Chemikalien auf dem Träger 2 aufgebracht werden.

Zur Steigerung des Automatisierungsgrades können einerseits die Temperatur der Badformulierung 3 und andererseits die Temperatur im Bereich der Trockenstrecke 11 gemessen werden und diese Meßwerte der Steuer- und/oder Regeleinrichtung 10 zugeführt werden. Weiters ist es möglich, die Füllstandshöhe der Badformulierung 3 im Behälter 4 automatisch zu überwachen und kann die Geschwindigkeit des Trägers 2, mit der dieser durch die Badformulierung 3 bewegt wird, über z.B. die Messung der Schichtdicke der Badformulierung 3 auf dem Träger 2 erfolgen.

Nach der Trocknung kann der beladene Träger 2 bzw. das mehrschichtige Laminat einer Zerkleinerungsvorrichtung 26 zugeführt werden, womit die jeweils vom Endverbraucher gewünschte Partikelgröße durch z.B. Mahlen, Schredden, Haspeln, Zerschneiden oder dgl. eingestellt wird. Damit ist auch eine vorbestimmbare Faserlänge, welche unter Umständen vom Endverbraucher, z.B. von der Bauindustrie, vorgegeben wird, einstellbar.

In vorteilhafter Weise kann ein Träger 2 eingesetzt werden, der eine erhöhte Saugfähigkeit aufweist, beispielsweise kann mit geeigneten Trägern 2 eine Menge an Badformulierung 3 aufgenommen werden, die dem fünf bis zehnfachen Eigengewicht des Trägers 2 entsprechen kann.

Vorteilhaft ist weiters, wenn der Träger 2 für die Badformulierung 3 eine gute Haftfähigkeit aufweist, so können beispielsweise Träger 2 verwendet werden, welche die Lösung(en) zumindest zum Teil in ihrem Inneren aufnehmen, d.h., daß die Träger 2 in ihrer Struktur beispielsweise Kanäle oder dgl. aufweisen können, sodaß eine unerwünschte Trennung des Feststoffes vom Träger 2 nach der Trocknung hintangehalten werden kann.

Das fertige Produkt kann zum Abschluß in versandfertige Behälter, wie beispielsweise Papiersäcke oder dgl. abgefüllt werden bzw. in einen Vorratsbehälter zur weiteren Verarbeitung zwischengelagert werden. Vorteilhaft ist dabei, daß das fertige Produkt nicht explosionsgefährdet ist und somit die Verpackung des selben problemlos möglich ist.

Schließlich sei noch erwähnt, daß es bei geeigneter Ausbildung des Trägers 2 möglich ist, den getrockneten Feststoff bzw. die festen Phasen durch geeignete Mittel, z.B. mit Hilfe von Bürsten oder dgl. wieder vom Träger 2 herabzulösen und so einerseits die feste(n) Phase(n) mit entsprechender Reinheit und andererseits den Träger 2 zur Neubeladung zur Verfügung zu haben.

Es ist aber ebenso möglich, daß im bzw. auf dem Träger 2 verteilt sogenannte Superabsorbentien, z.B. Silikagel, Molekularsiebe oder dgl. angeordnet sind, die einen Teil der flüssigen Phase der Badformulierung 3 aufnehmen können. Dadurch kann eine Verkürzung der Trocknung der festen Phase(n) erreicht werden. Durch Regeneration können diese Superabsorbentien unter Umständen wiederverwendet werden, beispielsweise für den Fall, daß der Träger 2 von der bzw. den feste(n) Phase(n) getrennt wird bzw. werden und der Träger 2 und/oder die Superabsorbentien einer Trocknung zugeführt werden.

Der Ordnung halber sei abschließend darauf hingewiesen, daß zum besseren Verständnis des Aufbaus der erfindungsgemäßen Anlage 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Anlage
- 2: Träger
- 3: Badformulierung
- 4: Behälter
- 5: Abwickelrolle
- 6: Umlenkrolle
- 7: Aufwickelrolle
- 8: Meßgerät
- 9: Leitung
- 10: Steuer- und/oder Regeleinrichtung
- 11: Trockenstrecke
- 12: Temperaturmeßgerät
- 13: Vorratsbehälter
- 14: Rührwerk
- 15: Höhe
- 16: Unterfläche
- 17: Oberfläche
- 18: Eindicker
- 19: Kanal
- 20: Trockenvorrichtung
- 21: Walze
- 22: Anpreßrolle
- 23: Düse
- 24: Bereich
- 25: Trockenbereich
- 26: Zerkleinerungsvorrichtung
- 27: Fraktioniervorrichtung

## Patentansprüche

1. Verfahren zur Gewinnung zumindest einer festen Phase aus einem Ein- oder Mehrkomponentensystem, bei dem ein bahnförmiger Träger mit Hilfe von Stütz- und/oder Führungsmittel zumindest bereichsweise durch einen Behälter geführt wird, welcher die in einem Lösungsmittel bzw. -gemisch gelöste und/oder in dem Lösungsmittel bzw. einer Flüssigkeit verteilte feste Phase aufnimmt, wobei sich eine bestimmbare Menge auf dem Träger abscheidet und der Träger nach dem Tauchvorgang einem Distributionsmittel, z.B. einer Aufwickelrolle, einem Stapelbehältnis oder dgl. zugeführt wird, dadurch gekennzeichnet, daß die auf dem Träger aufgebrachte Menge an fester Phase durch die Ziehgeschwindigkeit des Trägers durch das Bad bestimmt wird.

2. Verfahren nach Anspruch 1, dadurch gekennzeichnet, daß der Träger in einer Höhe durch den Behälter mit der Badformulierung geführt wird, bei der oberhalb und unterhalb des Trägers annähernd derselbe Druck vorherrscht.

3. Verfahren nach einem der Ansprüche 1 oder 2, dadurch gekennzeichnet, daß der Träger durch eine Matte, ein Vlies, ein Gewebe, eine Netz, ein Papier, einen Schwamm oder dgl., z.B. aus Fasern und/oder Fäden aus beispielsweise Cellulose, Zellstoff, Recyclingmaterialien, wie z.B. Altpapier, Kunststoffen, wie z.B. Polyethylen, Polypropylen, Celluloseacetat, Viskose bzw. Viskoseprodukte oder dgl. gebildet ist.

4. Verfahren nach einem oder mehreren der vorhergehenden Ansprüche, dadurch gekennzeichnet, daß der Träger bevorzugt vor dem Distributionsmittel eine Trockenstrecke durchläuft und dabei der Flüssigkeitsgehalt des Trägers und/oder des Feststoffes gesenkt wird.

5. Verfahren nach einem oder mehreren der vorhergehenden Ansprüche, dadurch gekennzeichnet, daß die Trocknung des Trägers und/oder Feststoffes thermisch bei einer Temperatur im Bereich von Raumtemperatur, z.B. 20°C, bis 150°C, bevorzugt 60°C bis 80°C erfolgt.

6. Verfahren nach einem oder mehreren der vorhergehenden Ansprüche, dadurch gekennzeichnet, daß die Trocknung des Trägers und/oder des Feststoffes mit Konvektionstrockner mit z.B. einem erwärmten Gas, wie z.B. Luft und/oder mit Strahlungstrockner mit z.B. Infrarot-Trockner, elektrischen Widerstandsheizungen oder dgl. und/oder mit Hochfrequenztrocknen erfolgt.

7. Verfahren nach einem oder mehreren der vorhergehenden Ansprüche, dadurch gekennzeichnet, daß das Distributionsmittel zusammen mit dem mit der festen Phase beladenen Träger einer Trocknung zugeführt wird.

8. Verfahren nach einem oder mehreren der vorhergehenden Ansprüche, dadurch gekennzeichnet, daß vor der Trockenstrecke eine mechanische Vortrocknung, z.B. mit einem Walzentrockner oder dgl. erfolgt.

9. Verfahren nach einem oder mehreren der vorhergehenden Ansprüche, dadurch gekennzeichnet, daß im Lösungsmittel mehrere feste Phasen gelöst und/oder verteilt, z.B. dispergiert sind.

10. Verfahren nach einem oder mehreren der vorhergehenden Ansprüche, dadurch gekennzeichnet, daß zur Aufrechterhaltung eines bestimmten Verteilungsgrades an in der jeweiligen Flüssigkeit verteilten, unlösbaren Feststoffen und/oder zum Konzentrationsausgleich die Badformulierung mit einem Rührwerk oder dgl. ständig bzw. zeitweise in Bewegung gehalten wird.

11. Verfahren nach einem oder mehreren der vorhergehenden Ansprüche, dadurch gekennzeichnet, daß die Konzentration des Feststoffes in der Badformulierung, insbesondere dem Lösungsmittel vor dem Tauchen des Trägers in z.B. Eindickern erhöht wird.

12. Verfahren nach einem oder mehreren der vorhergehenden Ansprüche, dadurch gekennzeichnet, daß zur Vermeidung einer ungleichmäßigen und/oder frühzeitigen Kristallisation der gelösten festen Phase auf dem Träger die Badformulierung auf einem gegenüber der Umgebungstemperatur erhöhtem Temperaturniveau gehalten wird.

13. Verfahren nach einem oder mehreren der vorhergehenden Ansprüche, dadurch gekennzeichnet, daß auf dem mit der festen Phase beladenen Träger auf zumindest einer Oberfläche, bevorzugt beidseitig zumindest ein weiterer, insbesondere bahnförmiger Träger z.B. über Anpreßwalzen oder dgl. angeordnet wird.

14. Verfahren nach einem oder mehreren der vorhergehenden Ansprüche, dadurch gekennzeichnet, daß zumindest ein weiterer Träger vor der Trocknung des beladenen Trägers angebracht wird.

15. Verfahren nach einem oder mehreren der vorhergehenden Ansprüche, dadurch gekennzeichnet, daß die vom Träger aufgenommene Menge an Badformulierung durch zumindest eine Anpreßrolle reguliert wird.

16. Verfahren nach einem oder mehreren der vorhergehenden Ansprüche, dadurch gekennzeichnet, daß der beladene Träger nach der Trocknung einer Zerkleinerungsvorrichtung, z.B. einer Mühle, einem Schredder, einer Haspel, einem Schneidwerkzeug oder dgl. zugeführt wird.

17. Verfahren nach einem oder mehreren der vorhergehenden Ansprüche, dadurch gekennzeichnet, daß über z.B. Siebe Fraktionen von mit der festen Phase beladenen Träger bestimmter Partikelgrößenbereiche erhalten werden.

18. Verfahren nach einem oder mehreren der vorhergehenden Ansprüche, dadurch gekennzeichnet, daß auf den das Bad verlassenden Träger über z.B. Sprühdüsen weitere Zusatzstoffe aufgetragen werden.

19. Verfahren nach einem oder mehreren der vorhergehenden Ansprüche, dadurch gekennzeichnet, daß die Ziehgeschwindigkeit des Trägers durch Schichtdickenmessungen automatisch reguliert wird.

20. Verfahren nach einem oder mehreren der vorhergehenden Ansprüche, dadurch gekennzeichnet, daß die Summe der Konzentrationen an festen Phasen in der Badformulierung im Bereich zwischen 15 Gew.-% und 70 Gew.-%, bevorzugt 20 Gew.-% und 50 Gew.-%, beträgt.

21. Verfahren nach einem oder mehreren der vorhergehenden Ansprüche, dadurch gekennzeichnet, daß der Träger eine aufgerauhte Oberfläche aufweist.

22. Verfahren nach einem oder mehreren der vorhergehenden Ansprüche, dadurch gekennzeichnet, daß der Träger vor der bzw. den feste(n) Phase(n) nach deren Trocknung durch beispielsweise Abbürsten voneinander getrennt werden.

23. Anlage zur Gewinnung einer festen Phase aus einem Ein- oder Mehrkomponentensystem, insbesondere für ein Verfahren nach einem der Ansprüche 1 bis 22, mit Mitteln, insbesondere Walzen, Rollen oder dgl. zur Bereitstellung, Führung, Abstützung und Aufnahme für zumindest einen bahnförmigen Träger, mit einem Behälter zur Aufnahme der Badformulierung und mit einer Trockenstrecke, dadurch gekennzeichnet, daß eine Zerkleinerungsvorrichtung (26), z.B. eine Mühle, ein Schredder, eine Haspel, ein Schneidwerkzeug oder dgl. bevorzugt nach einer Trockenstrecke (11) angeordnet ist.

24. Anlage nach Anspruch 23, dadurch gekennzeichnet, daß ein Meßwertgeber insbesondere zur Dickenmessung bevorzugt im Bereich nach dem Behälteraustritt des Trägers (2) angeordnet und mit einer Steuer- und/oder Regeleinrichtung (10) verbunden ist.

25. Anlage nach einem der Ansprüche 23 oder 24, dadurch gekennzeichnet, daß dem Behälter (4) ein Rührwerk (14) zugeordnet ist.

26. Anlage nach einem oder mehreren der Ansprüche 23 bis 25, dadurch gekennzeichnet, daß im Bereich des Trägers (2), bevorzugt nach dem Behälter (4) zumindest ein Mittel, insbesondere eine Sprühdüse bevorzugt zum Auftrag zumindest eines flüssigen Mediums auf den Träger (2) angeordnet ist.

27. Anlage nach einem oder mehreren der Ansprüche 23 bis 26, dadurch gekennzeichnet, daß die Anlage (1) bevorzugt nach der Zerkleinerungsvorrichtung (26) eine Fraktioniervorrichtung (27) zur Fraktionierung nach Teilchengrößebereichen, insbesondere ein Sieb umfaßt.

28. Anlage nach einem oder mehreren der Ansprüche 23 bis 27, dadurch gekennzeichnet, daß dem Behälter (4) und/oder der Trockenstrecke (11) zumindest ein Temperaturmeßwertgeber zugeordnet ist.

29. Feste Phase, insbesondere hergestellt nach einem Verfahren nach einem der Ansprüche 1 bis 22, dadurch gekennzeichnet, daß die feste Phase zum Teil aus einem saugfähigen und/oder faserartigen Material und zum Teil aus einem kristallinen und/oder amorphen Material besteht.

30. Feste Phase nach Anspruch 29, dadurch gekennzeichnet, daß die feste Phase eine Additivzusammensetzung für Putze, Baustoffe, ein Luftporenbildner, ein Tensid oder dgl. ist.

31. Feste Phase nach einem der Ansprüche 29 oder 30, dadurch gekennzeichnet, daß das saugfähige und/oder faserartige Material ein Armierwerkstoff, z.B. für Putze, Baustoffe oder dgl. ist.

32. Feste Phase nach einem oder mehreren der Ansprüche 29 bis 31, dadurch gekennzeichnet, daß das saugfähige und/oder faserartige Material ein Füllstoff z.B. für Tenside oder dgl. ist.
